# EUROPEAN PATENT APPLICATION

(11) **EP 4 583 456 A1**
(43) Date of publication of application: **09.07.2025**
(21) Application number: 23898023.9
(22) Date of filing: 20.09.2023
(51) Int. Cl.: H04L 9/40

(54) **DEVICE AND METHOD FOR SUPPORTING REMOTE SERVICE**

(30) Priority: 02.12.2022 KR 20220166956
(71) Applicant: Samsung Electronics Co., Ltd., Suwon-si, Gyeonggi-do 16677 (KR)
(72) Inventor: CHOI, Yeonseok, Suwon-si Gyeonggi-do 16677 (KR); CHOI, Moonsuk, Suwon-si, Gyeonggi-do 16677 (KR); BEAK, Joungsun, Suwon-si, Gyeonggi-do 16677 (KR); KIM, Jiwon, Suwon-si, Gyeonggi-do 16677 (KR)
(74) Representative: Walaski, Jan Filip
(86) International application number: PCT/KR2023/014213
(87) International publication number: WO 2024/117489

(57) **Abstract**

The present disclosure relates to a device and method for providing a remote service to a user terminal by means of an external electronic device in a remote service system. The electronic device may receive an authentication file containing an encrypted access key from a service server connected to a dedicated network, and restore the encrypted access key by using a symmetric key to obtain a first access key. The electronic device may receive a connection request message from the user terminal through the relay of an internal proxy provided so as to connect the user terminal to the service server through a public network, and obtain a second access key from the connection request message. The electronic device may allow remote service to the user terminal depending on whether the first access key and the second access key are identical.

## Description

### [Technical Field]

Various embodiments of the disclosure relate to a device and method for providing a remote service to a user terminal by an external electronic device in a remote service system.

### [Background Art]

An electronic device based on a network environment may use a service or function provided by a service server through the network. The electronic device may perform an authentication procedure to use the service or function provided by the service server.

The authentication procedure may be a procedure to identify whether the user of the electronic device (e.g., a user terminal such as a smartphone) is a person with normal authority to use the service. The authentication procedure may be provided based on an authentication scheme that uses, e.g., ID/password (PW) or a public key.

However, despite its advantages of being easy to implement and convenient to use, the authentication scheme using ID/password (PW) or public key may have a risk of exposure of the ID/password (PW) or public key to others.

### [Detailed Description of the Invention]

### [Technical Solution]

An embodiment of the disclosure may provide a service server that relays a remote service between a user terminal and an external electronic device designated by the user to allow the user terminal to use the remote service for the external electronic device, and an operation method thereof.

According to an embodiment, a service server may comprise a memory, a communication unit configured to perform communication with a user terminal connected to a public network or an external electronic device connected to a dedicated network, and a processor electrically connected to the memory or the communication unit and configured to perform relaying between the user terminal and the external electronic device. The processor may be configured to encrypt an access key for authentication of the user terminal using a symmetric key, transmit an authentication file including the encrypted access key to a remote service target electronic device, which is one of the external electronic device, through the communication unit. The processor may be configured to transmit a connection address guiding access to an internal proxy, and the access key, to the user terminal through the communication unit. The processor may be configured to transfer a connection request message including the access key received from the user terminal connected to the internal proxy to the remote service target electronic device through the internal proxy using the connection address.

According to an embodiment, a method for supporting a remote service by a service server may comprise an operation of encrypting an access key for authentication of a user terminal connected to a public network using a symmetric key, including in an authentication file, and transmitting to a remote service target electronic device which is one of an external electronic device connected to a dedicated network. The method may comprise an operation of transmitting a connection address guiding access to an internal proxy, and the access key, to the user terminal. The method may comprise an operation of receiving a connection request message including the access key from the user terminal connected to the internal proxy using the connection address. The method may comprise an operation of transferring the received connection request message to the remote service target electronic device through the internal proxy.

According to an embodiment, an electronic device may comprise a memory, a communication unit connected to a public network to allow only out-bound and configured to perform communication with a service server through a dedicated network, and a processor electrically connected to the memory or the communication unit and configured to provide a remote service to a user terminal by relaying by an internal proxy provided in the service server. The processor may be configured to receive an authentication file including an encrypted access key from the service server through the communication unit, and obtain a first access key by decrypting the encrypted access key of the authentication file using a symmetric key. The processor may be configured to receive a connection request message from the user terminal by relaying by the internal proxy, and obtain a second access key from the connection request message. The processor may be configured to allow the remote service for the user terminal based on whether the first access key and the second access key are identical.

According to an embodiment, a method for supporting a remote service for a user terminal by an electronic device connected to a public network to allow only out-bound may comprise an operation of receiving an authentication file including an encrypted access key from a service server connected to a dedicated network. The method may comprise an operation of obtaining a first access key by decrypting the encrypted access key included in the authentication file using a symmetric key. The method may comprise an operation of receiving a connection request message from the user terminal by relaying by an internal proxy provided to connect the user terminal to the service server. The method may comprise an operation of obtaining a second access key from the connection request message. The method may comprise an operation of allowing the remote service for the user terminal based on whether the first access key and the second access key are identical.

### [Brief Description of the Drawings]

FIG. 1 is a view illustrating a configuration of a remote service system providing a remote service according to an embodiment;
FIG. 2 is a view illustrating a signal processing procedure for a remote service in a remote service system according to an embodiment;
FIG. 3 is a control flowchart for a user terminal to use a remote service according to an embodiment;
FIG. 4 is a control flowchart for a service server to use a remote service according to an embodiment;
FIG. 5 is a control flowchart for a remote service target electronic device to use a remote service according to an embodiment;
FIG. 6 is a block diagram illustrating a configuration of a user terminal performing a remote service according to an embodiment;
FIG. 7 is a block diagram illustrating a configuration of a service server performing a remote service according to an embodiment;
FIG. 8 is a block diagram illustrating a configuration of an external electronic device performing a remote service according to an embodiment;
FIG. 9A illustrates an example of a screen for a user terminal to select an external electronic device to use a remote service according to an embodiment; and
FIG. 9B illustrates an example for a screen for a user terminal to control a remote service target electronic device according to an embodiment.

In connection with the description of the drawings, the same or similar reference numerals may be used to denote the same or similar elements.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

Various embodiments of the disclosure may provide a device and method for supporting an authentication scheme for preventing exposure of information (e.g., a string, token, or key) for authenticating a user terminal to use a remote service in a remote service system.

According to an embodiment of the disclosure, it is possible to prevent unintentional exposure of information (e.g., a string, token, or key) for user authentication while making less complicated a configuration and an operation method of a remote service system for providing a remote service to a user terminal by an external electronic device.

The technical objects of the disclosure are not limited to the foregoing, and other technical objects may be derived by one of ordinary skill in the art from example embodiments of the disclosure.

Effects of the present invention are not limited to the foregoing, and other unmentioned effects would be apparent to one of ordinary skill in the art from the following description. In other words, unintended effects in practicing embodiments of the disclosure may also be derived by one of ordinary skill in the art from example embodiments of the disclosure.

A remote service in the disclosure may refer to a service in which a user terminal (e.g., a smartphone, a PC, or a tablet) remotely controls an external electronic device (e.g., a television, a lighting, a refrigerator, a washing machine, an air conditioner, a boiler, and a lock) or remotely uses a service (e.g., a content service) provided by an external electronic device. For example, the remote service may be a service that uses a smartphone to change a channel of a television, adjust the volume, or support the use of an on-demand content service. If the remote control target supports a communication function, only functions to be controlled or used are different, and the remote service is not limited in the type of device.

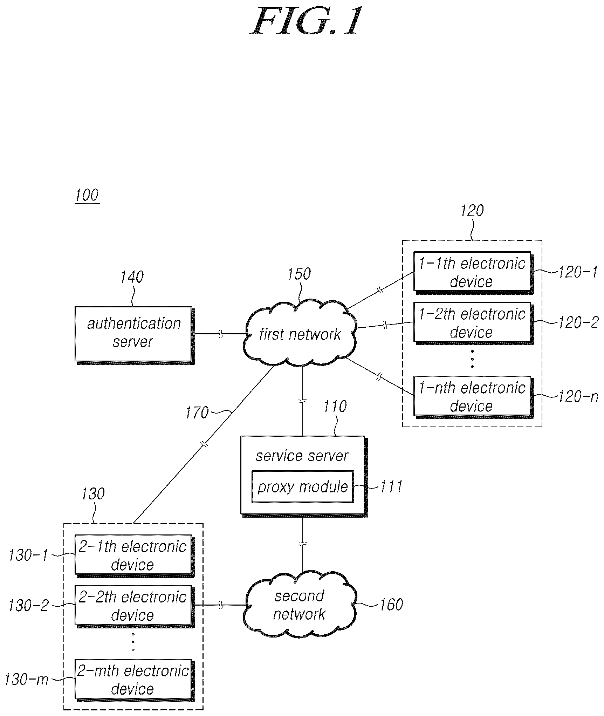

FIG. 1 is a view illustrating a configuration of a remote service system providing a remote service according to an embodiment.

Referring to FIG. 1, e.g., the remote service system 100 may include a service server 110, a user terminal group 120, or an external electronic device group 120. The remote service system 100 may include an authentication server 140. The user terminal group 120 may include one or more user terminals 120-1, 120-2, and 120-n to use a remote service. Hereinafter, one or more user terminals 120-1, 120-2, and 120-n included in the user terminal group 120 may be referred to as a 'first electronic device 120'. For example, n user terminals 120-1, 120-2, and 120-n may be referred to as a 1-1th electronic device 120-1 to a 1-nth electronic device 120-n. The external electronic device group 130 may include one or more external electronic devices 130-1, 130-2, and 130-m to provide a remote service in response to a request of the user terminal group 120. Hereinafter, one or more external electronic devices 130-1, 130-2, and 130-m included in the external electronic device group 130 may be referred to as a 'second electronic device 130'. For example, m external electronic devices 130-1, 130-2, and 130-m may be referred to as a 2-1th electronic device 130-1 to a 2-mth electronic device 130-m.

The service server 110 may be connected to a first network 150 or a second network 160. The first network 150 may be a public network, and the second network 160 may be a dedicated network (private network). The public network 150 may provide a connection service so that an unspecified number of people may access other communication networks or the Internet. The public network 150 may be, e.g., a communication network established by a communication company. The dedicated network 160 is a communication network established in a specific institution, such as a company or school, so that access is limited to a specific small number of people, and may be a private network. The dedicated network 160 is a concept according to the use of the network, and there may be no difference from the public network in the configuration form of the network or in base technologies such as hardware except for technologies such as security, address system, or authentication.

The user terminal group 120 may be connected to the first network 150. For example, each of the 1-1th to 1-nth electronic devices 120-1 to 120-n included in the user terminal group 120 may independently access the first network 150.

The external electronic device group 130 may be connected to the second network 160. For example, each of the 2-1th electronic devices 130-1 to 2-mth electronic devices 130-m included in the external electronic device group 130 may independently access the second network 160.

The external electronic device group 130 may also be connected to the first network 150. Each of the 2-1th to 2-mth electronic devices 130-1 to 130-m included in the external electronic device group 130 may independently access the first network 150. For example, the 2-1th to 2-mth electronic devices 130-1 to 130-m may be connected to the first network 150 to allow only out-bound 170. In this case, access to the 2-1th electronic device 130-1 to the 2-mth electronic device 130-m from the outside may be blocked.

As described above, the service server 110 may be connected to the 1-1th to 1-nth electronic devices 120-1 to 120-n included in the user terminal group 120 through the first network 150. A firewall such as a secure socket layer (SSL) may be provided between the service server 110 and the 1-1th to 1-nth electronic devices 120-1 to 120-n included in the user terminal group 120. The firewall may protect the service server 110 or the first electronic device 120 from being exposed to the outside.

According to an example, the first electronic device 120 may perform an authentication procedure for the user or a device in order to use a remote service. The first electronic device 120 may refer to one, some, or all of the 1-1th to 1-nth electronic devices 120-1 to 120-n included in the user terminal group 120. The first electronic device 120 may obtain authentication capable of using a remote service by performing an authentication procedure with the authentication server 140 or the service server 110 accessible through the first network 150. The authentication procedure may be provided according to an authentication method using a public key or log-in using an ID/PW.

If authentication is successful, the first electronic device 120 may select a target electronic device (hereinafter, referred to as a 'remote service target electronic device') to use a remote service. The remote service target electronic device may be one of the 2-1th electronic devices 130-1 to 2-mth electronic devices 130-m included in the external electronic device group 130.

The first electronic device 120 may access the proxy module 111 provided in the service server 110 using a connection address provided from the service server 110. The first electronic device 120 may transfer an access key, which is an authentication key provided from the service server 110, to the proxy module 111 at the request for a remote service.

The first electronic device 120 may receive a connection response from the proxy module 111 in response to the connection request transferred to the proxy module 111. When receiving the connection response, the first electronic device 120 may identify an authentication approval result transferred from the proxy module 111. If the approval result indicates an authentication success, the first electronic device 120 may perform an operation for a remote service with the remote service target electronic device 130 based on relaying by the proxy module 111.

According to an example, the service server 110 may encrypt an access key for authentication of the user terminal connected to a public network using a symmetric key, include it in an authentication file, and transmit it to the remote service target electronic device, which is one of the external electronic devices 130 connected to the dedicated network 160. The service server 110 may transmit a connection address for guiding access to the proxy module 111 provided therein and the access key to the user terminal (e.g., the first electronic device 120 of FIG. 1). The service server 110 may receive a connection request message including the access key from the first electronic device 120 connected to the proxy module 111 using the connection address. The service server 110 may transfer the received connection request message to the second electronic device 130, which is the remote service target electronic device, through the proxy module 111.

According to an example, the second electronic device 130 may be an electronic device connected to the public network 150 to allow only out-bound. The second electronic device 130 may refer to one, some or all of the 2-1th electronic devices 130-1 to 2-mth electronic devices 130-m included in the external electronic device group 130.

The second electronic device 130 may receive an authentication file including the encrypted access key from the service server 110 connected through the dedicated network 160. The second electronic device 130 may obtain the first access key by decrypting the encrypted access key included in the authentication file using the symmetric key. The second electronic device 130 may receive a connection request message from the first electronic device 120 by relaying by the proxy module 111 provided to connect to the first electronic device 120 to the service server 110 through the public network 150. The second electronic device 130 may obtain a second access key from the connection request message. The second electronic device 130 may allow remote service for the user terminal based on whether the first access key and the second access key are the same. If the authentication success is indicated by the approval result, the second electronic device 130 may perform an operation for a remote service with the first electronic device 120 based on relaying by the proxy module 111.

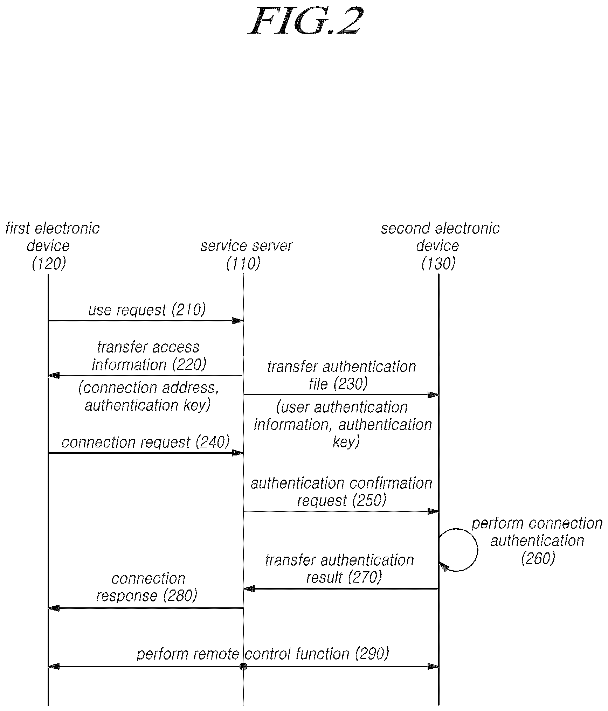

FIG. 2 is a view illustrating a signal processing procedure for a remote service in a remote service system (e.g.,, the remote service system 100 of FIG. 1) according to an embodiment.

Referring to FIG. 2, the first electronic device 120 corresponding to the user terminal (e.g., a smartphone or a PC) may transfer a use request message to the service server 110 (operation 210). The first electronic device 120 may transmit a use request message to the service server 110 for the purpose of requesting the use of the remote service.

According to an example, after accessing and logging in the service server 110, the first electronic device 120 may select one of the external electronic devices (e.g., one or more external electronic devices 130-1, 130-2, 130-m) included in the external electronic device group 130 of FIG. 1 as a remote service target electronic device (e.g., a television). For example, when the login is successful, the first electronic device 120 may output a screen for selecting at least one external electronic device corresponding to a target capable of using a remote service. The screen may be a screen on which an application (APP) is executed or may be a screen of access to a web page.

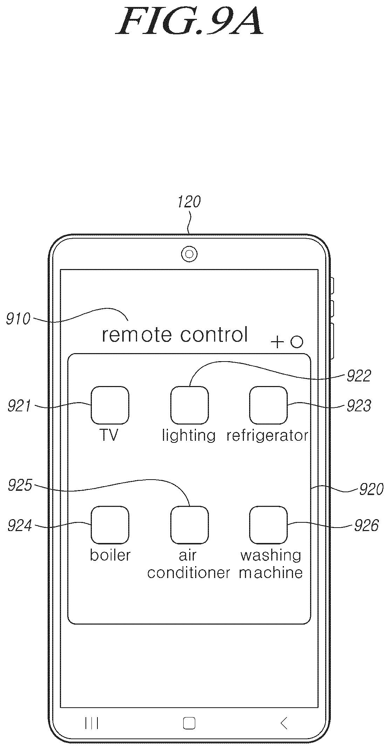

For example, when the first electronic device 120 is a smartphone, an example of the user interface (UI) displayed on the screen of the first electronic device 120 is shown in FIG. 9A so that the user may select a remote service target device. FIG. 9A shows an example in which icons 921, 922, 923, 924, 925, and 926 corresponding to a TV, a lighting, a refrigerator, a boiler, an air conditioner, and a washing machine as external electronic devices to which the remote control function 910 may be applied are displayed on the display of the first electronic device 120 that the user has successfully logged in. The icons may be floating icons.

The user may select one of the icons 921, 922, 923, 924, 925, and 926 displayed on the display of the first electronic device 120. If one icon is selected by the user, the first electronic device 120 may transfer information about the selected icon to the service server 110. Accordingly, the service server 110 may recognize that the user terminal to use the remote service is the first electronic device 120 or the first electronic device 120 is the remote service target electronic device to use the remote service. In the following description, it is assumed that the remote service target electronic device is the second electronic device 130. The second electronic device 130 may be one of the external electronic devices (e.g., one or more external electronic devices 130-1, 130-2, and 130-m included in the external electronic device group 130 of FIG. 1) that provide a remote service.

If the service server 110 receives a use request from the first electronic device 120, the service server 110 may transfer the authentication file to the second electronic device 130 through a dedicated network (e.g., the second network 160 of FIG. 1). The authentication file may include authentication information. The authentication information may be encrypted by a symmetric key. The service server 110 may share the symmetric key with the second electronic device 130 in advance. For example, the symmetric key may be shared when the second electronic device 130 initially connects to the service server 110. The symmetric key may be assigned to each external electronic device. Symmetric keys assigned to each of the external electronic devices may be different from each other.

For example, the authentication information to be encrypted by the symmetric key may include a string, a token, or a key (hereinafter referred to as an 'access key"). The authentication information may include information about an allowable time (e.g., 30 minutes) of the access key. The access key may be used at the time of authentication for allowing the use of the remote service by the first electronic device 120 or the user of the first electronic device 120. The access key may be used, e.g., only for a preset allowable time (e.g., 30 minutes) or an allowable procedure (e.g., performing connection authentication for the remote service). The access key may be discarded at the time when a preset allowable time elapses. The access key may be discarded at the time when connection authentication is completed.

The second electronic device 130 may receive an authentication file from the service server 110 (operation 230). The second electronic device 130 may decrypt the authentication information encrypted and included in the authentication file, using the symmetric key. The second electronic device 130 may obtain the access key from authentication information decrypted using the symmetric key. The second electronic device 130 may obtain information about the allowable time (e.g., 30 minutes) of the access key from the authentication information decrypted using the symmetric key.

The service server 110 may transfer access information for the remote service to the first electronic device 120 through a public network (e.g., the first network 150 of FIG. 1) (operation 220). The access information may include connection information or an access key. The connection information may include a connection address for a remote service. The connection address may be, e.g., a uniform resource locator (URL) capable of accessing a proxy (e.g., proxy module 111 of FIG. 1) provided in the service server 110.

The first electronic device 120 may obtain a connection address or an access key from the access information transferred from the service server 110. The first electronic device 120 may be connected to the proxy 111 provided in the service server 110 through the public network 150 using the obtained connection address (operation 240). If connected to the proxy 111, the first electronic device 120 may transfer a connection request message including the obtained access key to the proxy 111 through the public network 150 (operation 240). The connection request message may include information about the second electronic device 130 as a target to use a remote service. The information about the second electronic device 130 may include, e.g., identification information about the second electronic device 130.

If the proxy 111 of the service server 110 receives a connection request message from the first electronic device 120 through the public network 150, the proxy 111 may perform an authentication confirmation request operation of forwarding the received connection request message to the second electronic device 130 through the dedicated network 160 (operation 250). The proxy 111 may have already recognized the second electronic device 130 to transfer the connection request message in operation 210 previously performed. The proxy 111 may recognize the second electronic device 130 by identifying identification information included in the connection request message.

If the second electronic device 130 receives the connection request message from the service server 110, the second electronic device 130 may obtain the access key included in the connection request message. The second electronic device 130 may perform connection authentication based on whether the access key obtained from the authentication file matches the access key obtained from the connection request message (operation 260). If the two access keys (the access key obtained from the authentication file and the access key obtained from the connection request message) are the same, the second electronic device 130 may determine that remote service access by the first electronic device 120 is allowed by the service server 110. If the two access keys (the access key obtained from the authentication file and the access key obtained from the connection request message) are not the same, the second electronic device 130 may determine that remote service access by the first electronic device 120 is not allowed by the service server 110.

The second electronic device 130 may transfer the authentication result determined using the access key to the proxy 111 of the service server 110 through the dedicated network 160 (operation 270). The authentication result may include, e.g., an identifier indicating whether authentication is successful.

The proxy 111 of the service server 110 may transfer a connection response corresponding to the connection request to the first electronic device 120 through the public network 150 based on the authentication result received from the second electronic device 130 (operation 280).

If the connection response transferred from the proxy 111 indicates that authentication has succeeded, the first electronic device 120 may perform an operation according to the connection service for the second electronic device 130 (operation 290). The first electronic device 120 may perform an operation according to the connection service with the second electronic device 130 through the proxy 111. In other words, the first electronic device 120 may recognize that the procedure according to the connection service is performed with the proxy 111. The second electronic device 130 may also recognize that the procedure according to the connection service is performed with the proxy 111.

If the connection response transferred from the proxy 111 indicates that authentication has failed, the first electronic device 120 may not use the connection service for the second electronic device 130.

If the remote service of the second electronic device 130 by the first electronic device 120 is allowed, the service server 110 may generate a session key to replace the access key. The service server 110 may transfer the generated session key to the first electronic device 120 and/or the second electronic device 130. When transferring the session key to the first electronic device 120 and/or the second electronic device 130, the service server 110 may encrypt it using a symmetric key. The session key may be used for transmission or reception of data according to the remote service. After sharing the session key with the first electronic device 120 and/or the second electronic device 130, the service server 110 may discard the access key that has been used before. The service server 110 may encrypt the session key with the symmetric key and transfer it to the second electronic device 130.

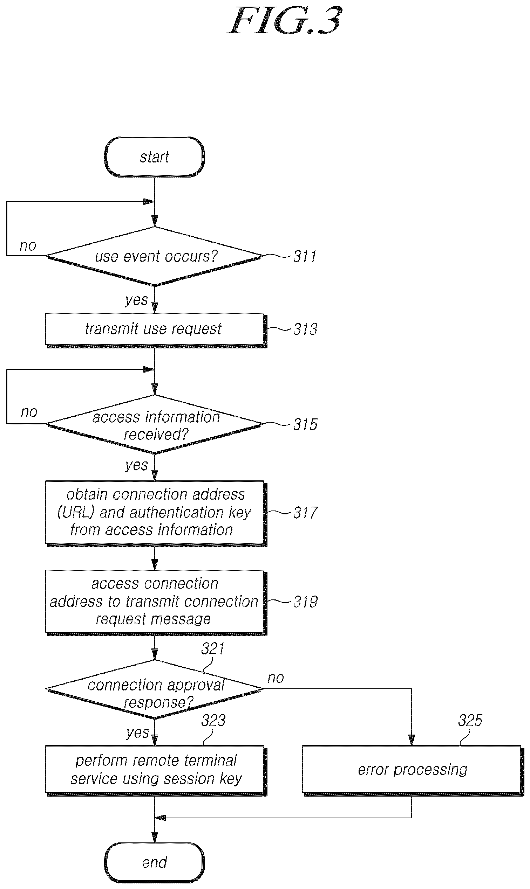

FIG. 3 is a control flowchart for a user terminal (e.g., the first electronic device 120 of FIG. 1) to use a remote service according to an embodiment.

Referring to FIG. 3, the first electronic device 120 corresponding to the user terminal (e.g., a smartphone or a PC) may determine whether a use event for requesting the use of a remote service by the user occurs in operation 311. The use event may be generated, e.g., as the user executes a program or app installed for a remote service.

If the use event occurs, the first electronic device 120 may transfer a use request message to the service server (e.g., the service server 110 of FIG. 1) in operation 313. The first electronic device 120 may transmit a use request message to the service server 110 for the purpose of requesting the use of the remote service.

According to an example, after accessing and logging in the service server 110, the first electronic device 120 may select one of the external electronic devices (e.g., one or more external electronic devices 130-1, 130-2, 130-m) included in the external electronic device group 130 of FIG. 1 as a remote service target electronic device (e.g., television). For example, when the login is successful, the first electronic device 120 may output a screen for selecting at least one external electronic device corresponding to a target capable of using a remote service. The screen may be a screen on which an application (APP) is executed or may be a screen of access to a web page.

For example, when the first electronic device 120 is a smartphone, an example of the user interface (UI) displayed on the screen of the first electronic device 120 is shown in FIG. 9A so that the user may select a remote service target device. FIG. 9A shows an example in which icons 921, 922, 923, 924, 925, and 926 corresponding to a TV, a lighting, a refrigerator, a boiler, an air conditioner, and a washing machine as external electronic devices to which the remote control function 910 may be applied are displayed on the display of the first electronic device 120 that the user has successfully logged in. The icons may be floating icons.

The user may select one of the icons 921, 922, 923, 924, 925, and 926 displayed on the display of the first electronic device 120. If one icon is selected by the user, the first electronic device 120 may transfer information about the selected icon to the service server 110. Accordingly, the service server 110 may recognize that the user terminal to use the remote service is the first electronic device 120 or the remote service target electronic device to which the first electronic device will use the remote service.

The first electronic device 120 may determine whether access information is received from the service server 110 in operation 315. If receiving the access information from the service server 110, the first electronic device 120 may obtain connection information or access key from the access information in operation 317. The connection information may include a connection address for a remote service. The connection address may be, e.g., a URL capable of accessing a proxy (e.g., proxy module 111 of FIG. 1) provided in the service server 110. The access key may be used at the time of authentication for allowing the use of the remote service by the first electronic device 120 or the user of the first electronic device 120. The access key may be used, e.g., only for a preset allowable time (e.g., 30 minutes) or an allowable procedure (e.g., performing connection authentication for the remote service). The access key may be discarded at the time when a preset allowable time elapses. The access key may be discarded at the time when connection authentication is completed.

The first electronic device 120 may be connected to the proxy 111 provided in the service server 110 through the public network 150 using the obtained connection address in operation 319. If connected to the proxy 111, the first electronic device 120 may transfer a connection request message including the obtained access key to the proxy 111 through the public network 150. The connection request message may include information about the second electronic device 130 as a target to use a remote service. The information about the second electronic device 130 may include, e.g., identification information about the second electronic device 130.

In operation 321, the first electronic device 120 may determine whether a connection approval response is received from the proxy 111 through the public network 150. For example, the first electronic device 120 may receive a connection response message from the proxy 111. The first electronic device 120 may identify authentication result information included in the received connection response message. The authentication result information may include, e.g., an identifier indicating whether authentication is successful. The first electronic device 1200 may identify whether the use of the remote service is approved by the identifier.

If the identifier indicates that authentication has succeeded, the first electronic device 120 may perform an operation according to the connection service for the second electronic device 130 in operation 323. The first electronic device 120 may perform the remote service using the session key to replace the access key. For example, the session key may be received from the proxy 111 after successful authentication of the connection service. The first electronic device 120 may perform an operation according to the connection service with the second electronic device 130 through the proxy 111. In other words, the first electronic device 120 may recognize that the procedure according to the connection service is performed with the proxy 111. The second electronic device 130 may also recognize that the procedure according to the connection service is performed with the proxy 111.

If the connection response transferred from the proxy 111 indicates that authentication has failed, the first electronic device 120 may not use the connection service for the second electronic device 130. In this case, in operation 325, the first electronic device 120 may perform error processing on the use event.

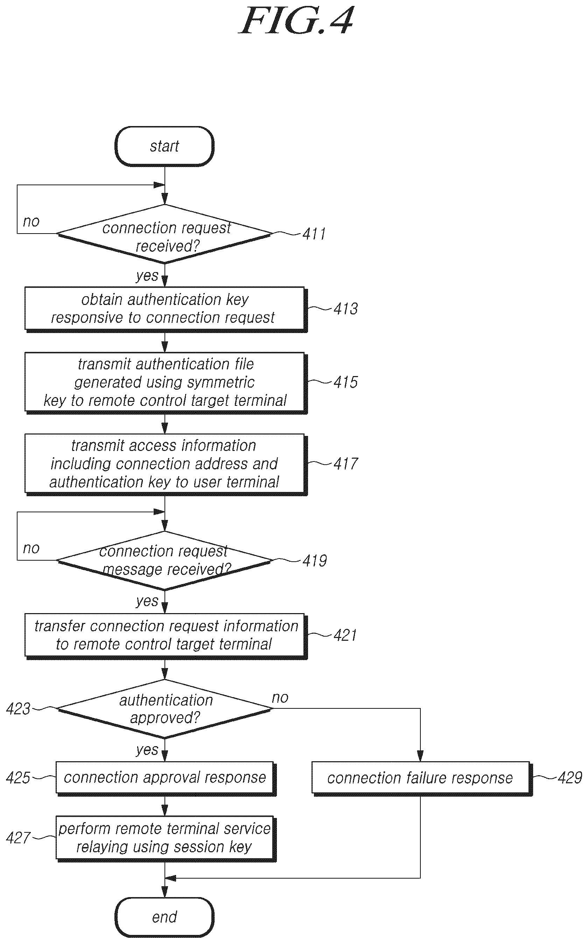

FIG. 4 is a control flowchart for a service server (e.g., the service server 110 of FIG. 1) to use a remote service according to an embodiment.

Referring to FIG. 4, in operation 411, the service server 110 may determine whether a connection request is received from a first electronic device (e.g., the first electronic device 120 of FIG. 1).

If receiving a use request from the first electronic device 120, in operation 413, the service server 110 may obtain an authentication key in response to the connection request. For example, the service server 110 may generate an access key corresponding to the authentication key. The access key may be used at the time of authentication for allowing the use of the remote service by the first electronic device 120 or the user of the first electronic device 120. The access key may be used, e.g., only for a preset allowable time (e.g., 30 minutes) or an allowable procedure (e.g., performing connection authentication for the remote service). The access key may be discarded at the time when a preset allowable time elapses. The access key may be discarded at the time when connection authentication is completed.

The service server 110 may transfer the authentication file to the second electronic device 130 through a dedicated network (e.g., the second network 160 of FIG. 1) in operation 415. The authentication file may include authentication information. The authentication information may be encrypted by a symmetric key. The service server 110 may share the symmetric key with the second electronic device 130 in advance. For example, the symmetric key may be shared when the second electronic device 130 initially connects to the service server 110. The symmetric key may be assigned to each external electronic device. Symmetric keys assigned to each of the external electronic devices may be different from each other.

The service server 110 may transfer access information for the remote service to the first electronic device 120 through a public network (e.g., the first network 150 of FIG. 1) in operation 417. The access information may include connection information or an access key. The connection information may include a connection address for a remote service. The connection address may be, e.g., a URL capable of accessing a proxy (e.g., proxy module 111 of FIG. 1) provided in the service server 110.

The proxy 111 of the service server 110 may determine whether a connection request message is received from the first electronic device 120 through the public network 150 in operation 419.

If receiving the connection request message, in operation 421, the proxy 110 may transfer the received connection request message to the second electronic device (e.g., the second electronic device 130 of FIG. 1) through the dedicated network 160. The proxy 111 may have already recognized the second electronic device 130 to transfer the connection request message in the previously performed operation of receiving the connection request. The proxy 111 may recognize the second electronic device 130 by identifying identification information included in the connection request message.

The proxy 111 of the service server 110 may transfer a connection response corresponding to the connection request to the first electronic device 120 through the public network 150 based on the authentication result received from the second electronic device 130 in operation 423, 425, or 429. For example, in operation 423, the proxy 111 may determine whether the authentication result indicates connection approval. If the authentication result indicates connection approval, the proxy 111 may transfer a connection approval response message to the first electronic device 120 in operation 425. If the authentication result indicates a connection failure, the proxy 111 may transfer a connection failure response message to the first electronic device 120 in operation 429.

If the connection is approved, the proxy 111 of the service server 110 may relay an operation according to the connection service between the first electronic device 120 and the second electronic device 130 in operation 427.

If the remote service of the second electronic device 130 by the first electronic device 120 is allowed, the service server 110 may generate a session key to replace the access key. The service server 110 may transfer the generated session key to the first electronic device 120 and/or the second electronic device 130. When transferring the session key to the first electronic device 120 and/or the second electronic device 130, the service server 110 may encrypt it using a symmetric key. The session key may be used for transmission or reception of data according to the remote service. After sharing the session key with the first electronic device 120 and/or the second electronic device 130, the service server 110 may discard the access key that has been used before. The service server 110 may encrypt the session key with the symmetric key and transfer it to the second electronic device 130.

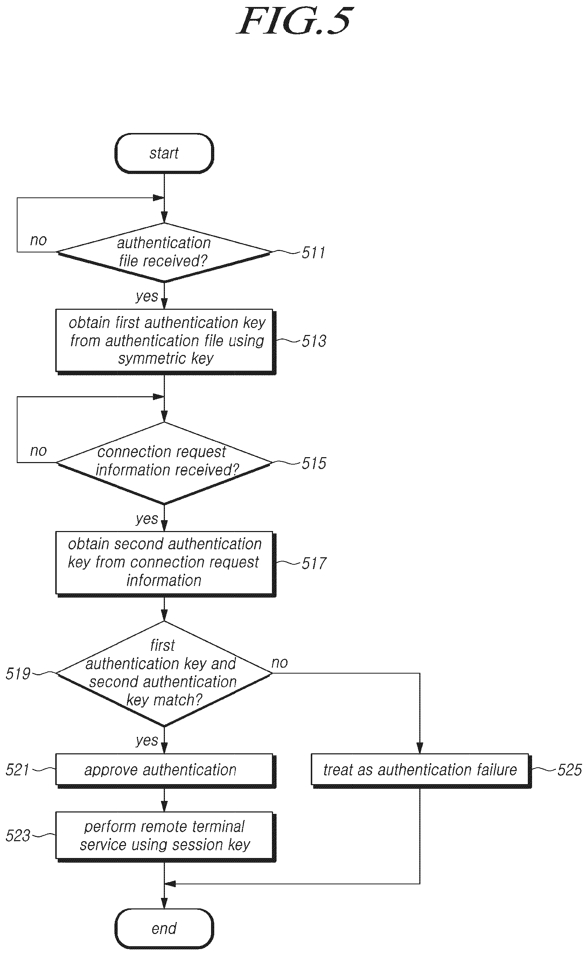

FIG. 5 is a control flowchart for a remote service target electronic device (e.g., the second electronic device 130 of FIG. 1) to use a remote service according to an embodiment.

Referring to FIG. 5, in operation 511, the second electronic device 130 may determine whether an authentication file is received from the service server 110. If receiving the authentication file, the second electronic device 130 may decrypt the authentication information encrypted and included in the authentication file, using the symmetric key in operation 513. The second electronic device 130 may obtain the access key (e.g., a first authentication key) from authentication information decrypted using the symmetric key. The second electronic device 130 may obtain information about the allowable time (e.g., 30 minutes) of the access key from the authentication information decrypted using the symmetric key.

The second electronic device 130 may determine whether connection request information is received from the proxy 111 of the service server 110 in operation 515. If the second electronic device 130 receives the connection request message from the proxy 111, in operation 517, the second electronic device 130 may obtain the access key (e.g., a second authentication key) included in the connection request message.

In operation 519, the second electronic device 130 may perform connection authentication based on whether the access key (e.g., the first authentication key) obtained from the authentication file and the access key (e.g., the second authentication key) obtained from the connection request message match.

If the first authentication key and the second authentication key are the same, the second electronic device 130 may approve authentication for remote service access by the first electronic device 120 in operation 521. If the first authentication key and the second authentication key are not the same, the second electronic device 130 may fail in authentication regarding remote service access by the first electronic device 120 in operation 525.

The second electronic device 130 may transfer the authentication result determined using the access key to the proxy 111 of the service server 110 through the dedicated network 160. The authentication result may include, e.g., an identifier indicating whether authentication is successful.

If authentication is approved, the second electronic device 130 may perform an operation according to the connection service for the first electronic device 120 in operation 523. The second electronic device 130 may recognize that the procedure according to the connection service is performed with the proxy 111.

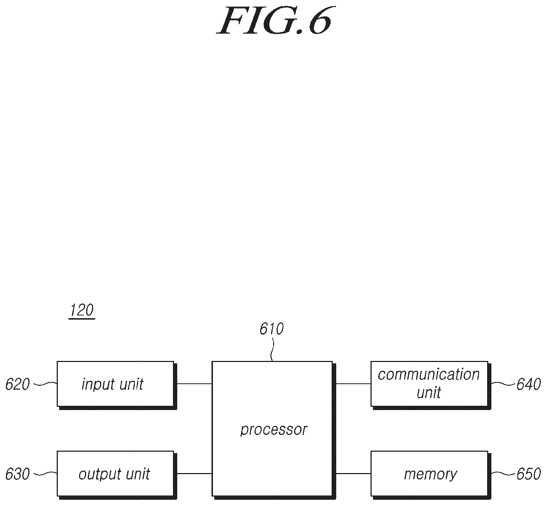

FIG. 6 is a block diagram illustrating a configuration of a user terminal (e.g., the first electronic device 120 of FIG. 1) performing a remote service according to an embodiment.

Referring to FIG. 6, according to an embodiment, the first electronic device 120 may include at least one processor 610, an input unit 620, an output unit 630, a communication unit 640, or a memory 650. The output unit 630 may include a display unit corresponding to a component, such as a display for providing visual information to the user.

The processor 610 may execute, e.g., software (e.g., a program) to control at least one other component (e.g., a hardware or software component) of the user equipment 120 connected with the processor 610 and may process or compute various data. As at least part of the data processing or computation, the processor 610 may store a command or data received from another component (e.g., the input unit 620) in the memory 650, process the command or the data stored in the memory 650, and store resulting data in the memory 650. The processor 610 may include a main processor (e.g., a central processing unit (CPU) or an application processor (AP)), or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor. For example, when the first electronic device 120 includes a main processor and an auxiliary processor, the auxiliary processor may be configured to use lower power than the main processor or to be specialized for a designated function. The auxiliary processor may be implemented separately from or as part of the main processor.

The memory 650 may store various data used by at least one component (e.g., the processor 610) of the first electronic device 120. The data may include, e.g., software (e.g., a program) and input data or output data for a command related thereto. The memory 650 may include volatile memory or nonvolatile memory.

The input unit 620 may receive a command or data to be used by other component (e.g., the processor 610) of the first electronic device 120, from the outside (e.g., a user) of the first electronic device 120. The input unit 620 may include, for example, a microphone, a mouse, a keyboard, keys (e.g., buttons), or a digital pen (e.g., a stylus pen).

The output unit 630 may externally output visual or auditory information to be transferred to the user. The output unit 630 may include, e.g., a speaker or receiver capable of outputting auditory information. The speaker may be used for general purposes, such as playing multimedia or playing record. The receiver may be used for receiving incoming calls. The receiver may be implemented as separate from, or as part of the speaker. The output unit 630 may include a display unit. The display unit may include a display that outputs visual information to the outside. The display unit may include, for example, a display, a hologram device, or a projector and control circuitry to control a corresponding one of the display, hologram device, and projector. The display unit may include a touch sensor configured to detect a touch, or a pressure sensor configured to measure the intensity of a force generated by the touch.

The communication unit 640 may support establishing a direct (e.g., wired) communication channel or a wireless communication channel between the first electronic device 120 and an external electronic device (e.g., the service server 110 of FIG. 1) and performing communication via the established communication channel. The communication unit 640 may include one or more communication processors that are operable independently from the processor 610 (e.g., the application processor (AP)) and supports a direct (e.g., wired) communication or a wireless communication. The communication unit 640 may include a wireless communication module (e.g., a cellular communication module, a short-range wireless communication module, or a global navigation satellite system (GNSS) communication module) or a wired communication module (e.g., a local area network (LAN) communication module or a power line communication module). A corresponding one of these communication modules may communicate with the external electronic device via a first network (e.g., a short-range communication network, such as Bluetooth^{™}, wireless-fidelity (Wi-Fi) direct, or infrared data association (IrDA)) or a second network (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other.

According to an example, the processor 610 may determine whether a use event for requesting use of a remote service by the user occurs. The processor 610 may determine that a use event is generated, e.g., as a program or app installed for the remote service is executed in response to a request of the user input through the input unit 620.

If the use event occurs, the processor 610 may transfer a use request message to the service server 110 through the communication unit 640. The processor 610 may transmit a use request message to the service server 110 for the purpose of requesting the use of the remote service.

According to an example, after accessing and logging in the service server 110, the processor 610 may select one of the external electronic devices (e.g., one or more external electronic devices 130-1, 130-2, 130-m) included in the external electronic device group 130 of FIG. 1 as a remote service target electronic device (e.g., a television). For example, when the login is successful, the processor 610 may output a screen for selecting at least one external electronic device corresponding to a target capable of using a remote service through a display unit provided in the output unit 630. The screen may be a screen on which an app is executed or may be a screen of access to a web page.

If receiving the access information from the service server 110 through the communication unit 640, the processor 610 may obtain connection information or access key from the access information. The connection information may include a connection address for a remote service. The connection address may be, e.g., a URL capable of accessing a proxy (e.g., proxy module 111 of FIG. 1) provided in the service server 110. The access key may be used at the time of authentication for allowing the use of the remote service by the first electronic device 120 or the user of the first electronic device 120. The access key may be used, e.g., only for a preset allowable time (e.g., 30 minutes) or an allowable procedure (e.g., performing connection authentication for the remote service). The access key may be discarded at the time when a preset allowable time elapses. The access key may be discarded at the time when connection authentication is completed.

The processor 610 may control the communication unit 640 to access the proxy 111 provided in the service server 110 through the public network 150 using the obtained connection address. If connected to the proxy 111, the processor 610 may control the communication unit 640 to transfer a connection request message including the obtained access key to the proxy 111 through the public network 150. The connection request message may include information about the second electronic device 130 as a target to use a remote service. The information about the second electronic device 130 may include, e.g., identification information about the second electronic device 130.

The processor 610 may receive the connection approval response transferred by the proxy 111 through the public network 150 through the communication unit 640. The processor 610 may identify authentication result information included in the received connection response message. The authentication result information may include, e.g., an identifier indicating whether authentication is successful. The processor 610 may identify whether the use of the remote service is approved by the identifier.

If the identifier indicates that authentication has succeeded, the processor 610 may perform an operation according to the connection service for the second electronic device 130. The processor 610 may perform the remote service using the session key to replace the access key. For example, the session key may be received from the proxy 111 after successful authentication of the connection service. The processor 610 may perform an operation according to the connection service with the second electronic device 130 through the proxy 111. In other words, the processor 610 may recognize that the procedure according to the connection service is performed with the proxy 111.

If the connection response transferred from the proxy 111 indicates that authentication has failed, the processor 610 may not use the connection service for the second electronic device 130. In this case, the processor 610 may perform error processing on the use event.

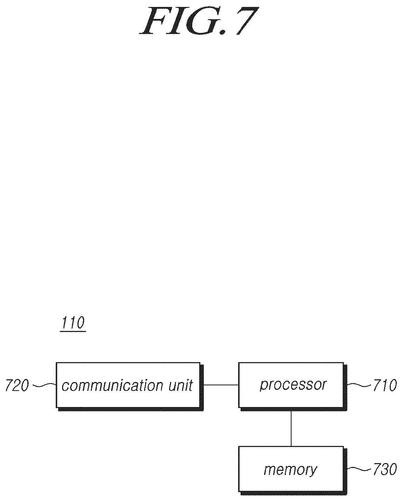

FIG. 7 is a block diagram illustrating a configuration of a service server (e.g., the service server 110 of FIG. 1) performing a remote service according to an embodiment.

Referring to FIG. 7, according to an example, the service server 110 may include at least one processor 710, a communication unit 720, or a memory 730.

The processor 710 may execute, e.g., software (e.g., a program) to control at least one other component (e.g., a hardware or software component) of the service server 110 connected with the processor 710 and may process or compute various data. As at least part of the data processing or computation, the processor 710 may store a command or data received from another component in the memory 730, process the command or the data stored in the memory 730, and store resulting data in the memory 730. The processor 710 may include a main processor (e.g., a central processing unit (CPU) or an application processor) or an auxiliary processor (e.g., a graphics processing unit (GPU), a neural processing unit (NPU), an image signal processor, a sensor hub processor, or a communication processor) that is operable independently from or in conjunction with the main processor. For example, when the service server 110 includes the main processor and the auxiliary processor, the auxiliary processor may be configured to use lower power than the main processor or to be specified for a designated function. The auxiliary processor may be implemented separately from or as part of the main processor.

The memory 730 may store various data used by at least one component (e.g., the processor 710) of the service server 110. The data may include, e.g., software (e.g., a program) and input data or output data for a command related thereto. The memory 730 may include volatile memory or nonvolatile memory.

The communication unit 720 may support establishing a direct (e.g., wired) communication channel or a wireless communication channel between the service server 110 and the user terminal (e.g., the first electronic device 120 of FIG. 1) through a public network (e.g., the first network 150 of FIG. 1), and performing communication via the established communication channel. The communication unit 720 may support establishing a direct (e.g., wired) communication channel or a wireless communication channel between the service server 110 and the remote service target electronic device (e.g., the second electronic device 130 of FIG. 1) through a dedicated network (e.g., the second network 160 of FIG. 1), and performing communication via the established communication channel. The communication unit 720 may include one or more communication processors that are operable independently from the processor 710 (e.g., the application processor (AP)) and supports a direct (e.g., wired) communication or a wireless communication. The communication unit 720 may include a wireless communication module (e.g., a cellular communication module, a short-range wireless communication module, or a global navigation satellite system (GNSS) communication module) or a wired communication module (e.g., a local area network (LAN) communication module or a power line communication module). A corresponding one of these communication modules may communicate with the external electronic device via a first network (e.g., a short-range communication network, such as Bluetooth^{™}, wireless-fidelity (Wi-Fi) direct, or infrared data association (IrDA)) or a second network (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other.

According to an example, the processor 710 may receive a connection request from the first electronic device 120 through the communication unit 720. If receiving a use request from the first electronic device 120, the processor 710 may obtain an authentication key in response to the connection request. For example, the processor 710 may generate an access key corresponding to the authentication key. The access key may be used at the time of authentication for allowing the use of the remote service by the first electronic device 120 or the user of the first electronic device 120. The access key may be used, e.g., only for a preset allowable time (e.g., 30 minutes) or an allowable procedure (e.g., performing connection authentication for the remote service). The access key may be discarded at the time when a preset allowable time elapses. The access key may be discarded at the time when connection authentication is completed.

The processor 710 may transfer the authentication file to the second electronic device 130 through the dedicated network 160. The authentication file may include authentication information. The authentication information may be encrypted by a symmetric key. The processor 710 may share the symmetric key with the second electronic device 130 in advance. For example, the symmetric key may be shared when the second electronic device 130 initially connects to the service server 110. The symmetric key may be assigned to each external electronic device. Symmetric keys assigned to each of the external electronic devices may be different from each other.

The processor 710 may control the communication unit 720 to transfer access information for the remote service to the first electronic device 120 through a public network (e.g., the first network 150 of FIG. 1). The access information may include connection information or an access key. The connection information may include a connection address for a remote service. The connection address may be, e.g., a URL capable of accessing a proxy (e.g., proxy module 111 of FIG. 1) provided in the service server 110.

If receiving a connection request message from the first electronic device 120 through the public network 150, the processor 710 may control the communication unit 720 to transfer the received connection request message to the second electronic device 130 through the dedicated network 160. The processor 710 may have already recognized the second electronic device 130 to transfer the connection request message in the previously performed operation of receiving the connection request. The processor 710 may recognize the second electronic device 130 by identifying identification information included in the connection request message.

The processor 710 may control the communication unit 720 to transfer a connection response corresponding to the connection request to the first electronic device 120 through the public network 150 based on the authentication result received from the second electronic device 130. For example, the processor 710 may determine whether the authentication result indicates connection approval. If the authentication result indicates connection approval, the processor 710 may control the communication unit to transfer a connection approval response message to the first electronic device 120. If the authentication result indicates a connection failure, the processor 710 may control the communication unit 720 to transfer a connection failure response message to the first electronic device 120.

If the connection is approved, the processor 710 may perform the overall control for relaying an operation according to the connection service between the first electronic device 120 and the second electronic device 130.

If the remote service of the second electronic device 130 by the first electronic device 120 is allowed, the processor 710 may generate a session key to replace the access key. The processor 710 may control the communication unit 720 to transfer the generated session key to the first electronic device 120 and/or the second electronic device 130. When transferring the session key to the first electronic device 120 and/or the second electronic device 130, the processor 710 may encrypt it using a symmetric key. The session key may be used for transmission or reception of data according to the remote service. After sharing the session key with the first electronic device 120 and/or the second electronic device 130, the processor 710 may discard the access key that has been used before. The processor 710 may encrypt the session key with the symmetric key and transfer it to the second electronic device 130.

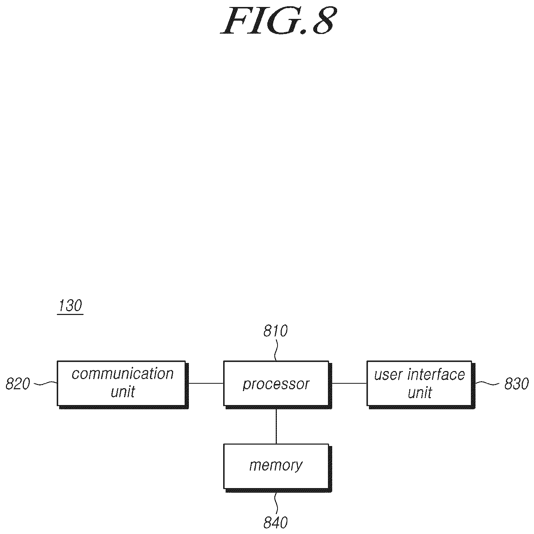

FIG. 8 is a block diagram illustrating a configuration of an external electronic device (e.g., the second electronic device 130 of FIG. 1) performing a remote service according to an embodiment.

Referring to FIG. 8, according to an example, the second electronic device 130 may include at least one processor 810, a communication unit 820, a user interface unit 830, or a memory 840. The user interface unit 830 may include an output unit or an input unit. The output unit may include a display unit corresponding to a component, such as a display for providing visual information to the user.

The processor 810 may execute, e.g., software (e.g., a program) to control at least one other component (e.g., a hardware or software component) of the second electronic device 130 connected with the processor 810 and may process or compute various data. As at least part of the data processing or computation, the processor 810 may store a command or data received from another component (e.g., the user interface 830) in the memory 840, process the command or the data stored in the memory 840, and store resulting data in the memory 840. The processor 810 may include a main processor (e.g., a central processing unit (CPU) or an application processor) or an auxiliary processor (e.g., a graphics processing unit (GPU), a neural processing unit (NPU), an image signal processor, a sensor hub processor, or a communication processor) that is operable independently from or in conjunction with the main processor. For example, when the second electronic device 120 includes a main processor and an auxiliary processor, the auxiliary processor may be configured to use lower power than the main processor or to be specialized for a designated function. The auxiliary processor may be implemented separately from or as part of the main processor.

The communication unit 820 may support establishing a direct (e.g., wired) communication channel or a wireless communication channel between the first electronic device 130 and an external electronic device (e.g., the service server 110 of FIG. 2) and performing communication via the established communication channel. The communication unit 820 may include one or more communication processors that are operable independently from the processor 810 (e.g., the application processor (AP)) and supports a direct (e.g., wired) communication or a wireless communication. The communication unit 820 may include a wireless communication module (e.g., a cellular communication module, a short-range wireless communication module, or a global navigation satellite system (GNSS) communication module) or a wired communication module (e.g., a local area network (LAN) communication module or a power line communication module). A corresponding one of these communication modules may communicate with the external electronic device via a first network (e.g., a short-range communication network, such as Bluetooth^{™}, wireless-fidelity (Wi-Fi) direct, or infrared data association (IrDA)) or a second network (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other.

The user interface unit 830 may perform an operation for sharing information with the user. The input unit included in the user interface 830 may receive a command or data to be used by a component (e.g., the processor 810) of the second electronic device 130 from the outside (e.g., the user) of the electronic device 110. The input unit may include, e.g., a microphone, a mouse, a keyboard, a key (e.g., a button), or a digital pen (e.g., a stylus pen). The output unit included in the user interface 830 may externally output visual or auditory information to be transferred to the user. The output unit may include, e.g., a speaker or receiver capable of outputting auditory information. The speaker may be used for general purposes, such as playing multimedia or playing record. The receiver may be used for receiving incoming calls. The receiver may be implemented as separate from, or as part of the speaker. The output unit may include a display unit. The display unit may include a display that outputs visual information to the outside. The display unit may include, for example, a display, a hologram device, or a projector and control circuitry to control a corresponding one of the display, hologram device, and projector. The display unit may include a touch sensor configured to detect a touch, or a pressure sensor configured to measure the intensity of a force generated by the touch.

The memory 840 may store various data used by at least one component (e.g., the processor 810) of the second electronic device 130. The data may include, e.g., software (e.g., a program) and input data or output data for a command related thereto. The memory 650 may include volatile memory or nonvolatile memory.

According to an example, if receiving the authentication file from the service server 110, the processor 810 may decrypt the authentication information encrypted and included in the authentication file, using the symmetric key. The processor 810 may obtain the access key (e.g., a first authentication key) from authentication information decrypted using the symmetric key. The processor 810 may obtain information about the allowable time (e.g., 30 minutes) of the access key from the authentication information decrypted using the symmetric key.

If receiving the connection request information from the proxy 111 of the service server 110, the processor 810 may obtain the access key (e.g., the second authentication key) included in the connection request message.

The processor 810 may perform connection authentication based on whether the access key (e.g., the first authentication key) obtained from the authentication file and the access key (e.g., the second authentication key) obtained from the connection request message match.

If the first authentication key and the second authentication key are the same, the processor 810 may approve authentication for remote service access by the first electronic device 120. If the first authentication key and the second authentication key are not the same, the processor 810 may fail in authentication regarding remote service access by the first electronic device 120.

The processor 810 may control the communication unit 820 to transfer the authentication result determined using the access key to the proxy 111 of the service server 110 through the dedicated network 160. The authentication result may include, e.g., an identifier indicating whether authentication is successful.

If authentication is approved, the processor 810 may perform the overall control for a connection service targeting the first electronic device 120. The processor 810 may recognize that the procedure according to the connection service is performed with the proxy 111.

FIG. 9A illustrates an example of a screen for selecting an external electronic device (e.g., the second electronic device 130 of FIG. 1) to use a remote service by a user terminal (e.g., the first electronic device 120 of FIG. 1) according to an embodiment.

Referring to FIG. 9A, when the user terminal 120 is a smartphone, the user terminal 120 may display a screen 920 so that the user may select a remote service target device. On the screen, icons 921, 922, 923, 924, 925, and 926 corresponding to a TV, a lighting, a refrigerator, a boiler, an air conditioner, and a washing machine as external electronic devices to which the remote control function 910 may be applied may be displayed on the display of the first electronic device 120 that the user has successfully logged in. The icons may be floating icons.

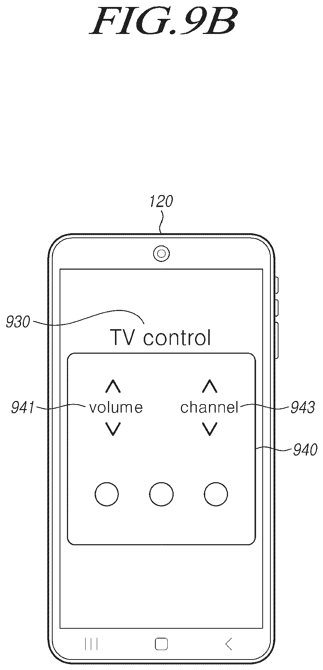

FIG. 9B illustrates an example of a screen for controlling a remote service target electronic device (e.g.,, the second electronic device 130 of FIG. 1) by a user terminal (e.g., the first electronic device 120 of FIG. 1) according to an embodiment.

Referring to FIG. 9B, the user terminal 120 may display one or more icons having a function for controlling the target electronic device to use the remote service by the user through the screen. For example, If a TV is selected as the target electronic device to use the remote service by the user, the user terminal 120 may display a screen 940 for TV control 930. A function icon 941 for adjusting the volume or a function icon 943 for changing the channel may be included on the displayed screen 940.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., memory) that is readable by a machine (e.g., the remote service system 100). For example, a processor (e.g., the processor 610, 710, or 810) of the machine (e.g., the service server 110, the first electronic device 120, or the second electronic device 130) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A service server (110), comprising:
a memory (730);
a communication unit (720) configured to perform communication with a user terminal (120) connected to a public network (150) or an external electronic device (130) connected to a dedicated network (160); and
a processor (730) electrically connected to the memory (730) or the communication unit (720) and configured to perform relaying between the user terminal (120) and the external electronic device (130), wherein the processor (730) is configured to:
encrypt an access key for authentication of the user terminal (120) using a symmetric key;
transmit an authentication file including the encrypted access key to a remote service target electronic device (130-1, 130-2, or 130-m), which is one of the external electronic device (130), through the communication unit (720);
transmit a connection address guiding access to an internal proxy (111), and the access key, to the user terminal (120) through the communication unit (720); and
transfer a connection request message including the access key received from the user terminal (120) connected to the internal proxy (111) to the remote service target electronic device (130-1, 130-2, or 130-m) through the internal proxy (111) using the connection address.

2. The service server (110) of claim 1, wherein the processor (710) is configured to transfer an authentication result from the remote service target electronic device (130-1, 130-2, or 130-m) to the user terminal (120) through the internal proxy (111), in response to a decrypted access key decrypted from the encrypted access key using the symmetric key matching the access key included in the connection request message.

3. The service server (110) of claim 1, wherein the processor (710) is configured to provide the user terminal (120) with a session key that is a new string to replace the access key, in response to a decrypted access key decrypted from the encrypted access key using the symmetric key matching the access key included in the connection request message

4. The service server (110) of any one of claims 1 to 3, wherein the processor (710) is configured to:
include information about a valid use period preset for the encrypted access key in the authentication file and transfer to the remote service target electronic device (130-1, 130-2, or 130-m); and
obtain an external electronic device (130) selected from the user terminal (120) succeeding in authentication for use of a remote service using a predetermined authentication scheme, as the remote service target electronic device (130-1, 130-2, or 130-m).

5. A method for supporting a remote service by a service server (110), the method comprising:
an operation (415) of encrypting an access key for authentication of a user terminal (120) connected to a public network (150) using a symmetric key, including in an authentication file, and transmitting to a remote service target electronic device (130-1, 130-2, or 130-m) which is one of an external electronic device (130) connected to a dedicated network (160);
an operation (417) of transmitting a connection address guiding access to an internal proxy (111), and the access key, to the user terminal (120);
an operation (419) of receiving a connection request message including the access key from the user terminal (120) connected to the internal proxy (111) using the connection address; and
an operation (421) of transferring the received connection request message to the remote service target electronic device (130-1, 130-2, or 130-m) through the internal proxy (111).

6. The method of claim 5, comprising:
an operation (423) of receiving an authentication result from the remote service target electronic device (130-1, 130-2, or 130-m) in response to a decrypted access key decrypted from the encrypted access key using the symmetric key matching the access key included in the connection request message; and
an operation (425, 429) of transferring the received authentication result to the user terminal (120) through the internal proxy.

7. The method of claim 5, comprising providing the user terminal (120) with a session key that is a new string to replace the access key, in response to a decrypted access key decrypted from the encrypted access key using the symmetric key matching the access key included in the connection request message

8. The method of any one of claims 5 to 7, wherein the authentication file includes information about a valid use period preset for the encrypted access key, and
wherein the method comprises obtaining an external electronic device (130) selected from the user terminal (120) succeeding in authentication for use of a remote service using a predetermined authentication scheme, as the remote service target electronic device (130-1, 130-2, or 130-m).

9. An electronic device (130), comprising:
a memory (840);
a communication unit (820) connected to a public network to allow only out-bound and configured to perform communication with a service server (110) through a dedicated network (160); and
a processor (810) electrically connected to the memory (840) or the communication unit (820) and configured to provide a remote service to a user terminal (120) by relaying by an internal proxy (111) provided in the service server (110), wherein the processor (810) is configured to:
receive an authentication file including an encrypted access key from the service server (110) through the communication unit (820);
obtain a first access key by decrypting the encrypted access key of the authentication file using a symmetric key;
receive a connection request message from the user terminal (120) by relaying by the internal proxy (111);
obtain a second access key from the connection request message; and
allow the remote service for the user terminal (120) based on whether the first access key and the second access key are identical.

10. The electronic device (130) of claim 9, wherein the processor (810) is configured to, in case that the first access key and the second access key are identical, transfer a session key, which is a new string to replace the access key or an authentication result allowing the remote service for the user terminal (120) to the user terminal (120) through the internal proxy (111).

11. The electronic device (130) of claim 9 or 10, wherein the processor (810) is configured to:
obtain information about a valid use period preset for the encrypted access key from the authentication file; and
identify itself as a remote service target electronic device by selection of the user terminal (120) succeeding in authentication for use of the remote service using a predetermined authentication scheme.

12. A method for supporting a remote service for a user terminal (120) by an electronic device (130) connected to a public network (150) to allow only out-bound, the method comprising:
an operation (511) of receiving an authentication file including an encrypted access key from a service server (110) connected to a dedicated network;
an operation (513) of obtaining a first access key by decrypting the encrypted access key included in the authentication file using a symmetric key;
an operation (515) of receiving a connection request message from the user terminal (120) by relaying by an internal proxy (111) provided to connect the user terminal (120) to the service server (110);
an operation (517) of obtaining a second access key from the connection request message; and
an operation (519) of allowing the remote service for the user terminal (120) based on whether the first access key and the second access key are identical.

13. The method of claim 12, comprising an operation (521) of, in case that the first access key and the second access key are identical, transferring an authentication result allowing the remote service for the user terminal (120) to the user terminal (120) through the internal proxy (111).

14. The method of claim 12, comprising, in case that the first access key and the access key are identical, providing a session key which is a new string to replace the access key to the user terminal (120).

15. The method of any one of claims 12 to 14, further comprising:
obtaining information about a valid use period preset for the encrypted access key from the authentication file; and
identifying itself as a remote service target electronic device by selection of the user terminal (120) succeeding in authentication for use of the remote service using a predetermined authentication scheme.
